# EUROPÄISCHE PATENTANMELDUNG

(11) **EP 0 804 872 A1**
(43) Veröffentlichungstag der Anmeldung: **05.11.1997**
(21) Anmeldenummer: 97106763.2
(22) Anmeldetag: 24.04.1997
(51) Int. Cl.: A01D 41/12, G01F 1/30

(54) **Optimierung der Korndurchsatz- und Kornfeuchtemessung im Mähdrescher**

(30) Priorität: 02.05.1996 DE 19617560
(71) Anmelder: SAME S.p.A., I-24047 Treviglio (Bergamo) (IT)
(72) Erfinder: Dalmer, Jürgen, 89240 Höchstädt (DE)
(74) Vertreter: Nau, Walter, Dipl.-Ing.

(57) **Zusammenfassung**

Mähdrescher zumindest mit einer in einem Förderkanal (14) zur Förderung einer Erntegutmenge (7), insbesondere einer Körnermenge, angeordneten Fördereinrichtung, wobei der Fördereinrichtung eine Meßeinrichtung zur Erfassung zumindest eines Teiles der Erntegutmenge (7) nachgeordnet ist und die Lage der Fördereinrichtung in Bezug auf den Förderkanal (14) einstellbar ist.

## Beschreibung

Die Erfindung betrifft einen zumindest mit einer in einem Förderkanal zur Förderung einer Erntegutmenge, insbesondere einer Körnermenge, angeordneten Fördereinrichtung, wobei der Fördereinrichtung eine Meßeinrichtung zur Erfassung zumindest eines Teiles der Erntegutmenge nachgeordnet ist.

Aus der DE 41 38 531 A1 ist eine Vorrichtung zur Messung zumindest eines Teiles einer Erntegutmenge bekannt. Hieraus ist bei einer Fördereinrichtung eines Mähdreschers eine als Kondensator ausgebildete Meßeinrichtung bekannt, wobei die Meßstelle in einem Bereich angeordnet ist, den die Erntegutmenge in einem freien Fall durchsetzt. Diese Anordnung der Meßstelle hat sich zwar in der Praxis bewährt, weist aber die Nachteile auf, daß zum einen die als elektrischer Kondensator aufgebaute Meßstelle stark schwankende Ausgangssignale abgibt, die abhängig von der Feuchtigkeit der Erntegutmenge bei gleichem Volumen sind. Zum anderen ist es von Nachteil, daß die Meßstelle in einem Bereich anzuordnen ist, den die Erntegutmenge in einem freien Fall durchsetzt, so daß damit die konstruktiven Möglichkeiten für die Anordnung der Meßstelle eingeschränkt ist beziehungsweise der Fördereinrichtung ein Bereich nachgeordnet werden muß, den die Erntegutmenge in einem freien Fall durchsetzt.

Eine weitere bekannte Möglichkeit besteht darin, die Meßstelle direkt im Endbereich der Fördereinrichtung anzuordnen, wobei dann im Laufe des Betriebes der Fördereinrichtung aufgrund des Verschleißes die Meßergebnisse verfälscht werden.

Der Erfindung liegt daher die Aufgabe zugrunde, einen Mähdrescher bereitzustellen, bei dem während des Betriebes und über die gesamte Lebensdauer des Mähdreschers korrekte und den tatsächlichen Erntegutmengen entsprechenden Meßsignale geliefert werden.

Die Aufgabe ist erfindungsgemäß dadurch gelöst, daß die Lage der Fördereinrichtung in Bezug auf den Förderkanal einstellbar ist. Dies hat zum einen den Vorteil, daß bei der Produktion des Mähdreschers die Lage der Fördereinrichtung in Bezug auf den Förderkanal auf eine definierte Lage eingestellt werden kann und daß zum anderen im weiteren Verlauf des Betriebes des Mähdreschers die Lage nachgestellt werden kann. Dies geschieht beispielsweise in Abhängigkeit eines Probelaufes, bei dem mit einer definierten Erntegutmenge ein definiertes Ausgangssignal der Meßeinrichtung erzielt werden muß. Denkbar ist auch, die Einstellung (Kalibrierung) bei einem Leerlauf der Fördereinrichtung vorzunehmen, sowie einer Neukalibrierung über eine Steuereinheit nach Eingabe von tatsächlich durchgesetzten Mengen die nachgewogen werden.

In Weiterbildung der Erfindung ist zwischen einem Endbereich der Fördereinrichtung und dem Förderkanal eine einstellbare Leiteinrichtung angeordnet. Diese Leiteinrichtung ist in vorteilhafter Weise als Platte oder Blech ausgestaltet, wobei eine Ausgestaltung, die eine Abdeckung der Seitenbereiche der Leiteinrichtung (beispielsweise U-förmige Ausgestaltung der Leiteinrichtung), umfaßt, auch denkbar ist. Dies ist beispielsweise bei einer als Kettenelevator ausgebildeten Fördereinrichtung der Fall, während bei einer als Schnecke ausgebildeten Fördereinrichtung die Leiteinrichtung einen bogenförmigen Querschnitt (beispielsweise Halbkreis) aufweist. Durch stufenlos oder in Stufen einstellbare Mittel kann die Lage der Leiteinrichtung eingestellt werden, und zwar in einer solchen Art und Weise, daß der Abstand der Leiteinrichtung zu der Fördereinrichtung auf ein vorgebbares Maß einstellbar ist. Dies hat den Vorteil, daß dann, wenn die Fördereinrichtung in Bezug auf den Förderkanal eingestellt beziehungsweise verstellt wurde, das Maß zwischen der Leiteinrichtung und der Fördereinrichtung im gleichen Maße oder in einem davon verschiedenen Maße ebenfalls eingestellt beziehungsweise verstellt werden kann. Dies ist erforderlich, wenn die konstruktive Ausgestaltung der Meßeinrichtung und deren Meßverfahren eines weitestgehend konstanten Abstand zwischen der Leiteinrichtung und der Fördereinrichtung erfordert.

In Weiterbildung der Erfindung ist die Leiteinrichtung in Bezug auf den Förderkanal festsetzbar einstellbar. Das heißt, daß die Befestigung der Leiteinrichtung beispielsweise an dem Förderkanal gelöst werden kann, das erforderliche Maß beziehungsweise der Abstand zwischen der Leiteinrichtung und der Fördereinrichtung eingestellt wird, wonach die Befestigung wieder festgesetzt wird. Dies hat den Vorteil, daß die Leiteinrichtung unabhängig von einer Verstellung beziehungsweise Einstellung der Lage der Fördereinrichtung in Bezug auf den Förderkanal eingestellt werden kann.

In Weiterbildung der Erfindung ist die Leiteinrichtung fest an der Fördereinrichtung angeordnet. Dies hat den Vorteil, daß beispielsweise bei der Herstellung der Fördereinrichtung die Lage der Leiteinrichtung in Bezug auf die Fördereinrichtung einmalig festgesetzt wird, wobei unabhängig davon die Einstellung der Lage der Fördereinrichtung in Bezug auf den Förderkanal nach wie vor möglich ist. Damit ist beispielsweise ein Nachspannen der Kette des Kettenelevators möglich, wobei der erforderliche Abstand der Leiteinrichtung in Bezug zu der Fördereinrichtung bei der Einstellung unbeeinflußt bleibt. Dadurch werden von der Meßeinrichtung weiterhin korrekte Meßergebnisse geliefert.

In Weiterbildung der Erfindung ist die Befestigung der Leiteinrichtung außerhalb des Förderkanales erreichbar. Dies hat den Vorteil, daß die Leiteinrichtung, die an der Fördereinrichtung befestigt ist, wobei diese gesamte Einheit innerhalb des Förderkanales angeordnet ist, zur Einstellung des Abstandes zwischen der Fördereinrichtung und der Leiteinrichtung leicht zugänglich ist. Dies kann beispielsweise dadurch realisiert werden, daß in dem Förderkanal eine abnehmbare Abdeckung angeordnet ist oder die Befestigung der Leiteinrichtung durch den Förderkanal nach außen geführt ist.

In Weiterbildung der Erfindung hat der Abstand zwischen der Leiteinrichtung und den Außenkonturen der Fördereinrichtung ein vorgebbares konstantes Maß und bleibt nach der Einstellung konstant. Dadurch wird gewährleistet, daß die Fördereinrichtung in Bezug auf den Förderkanal beliebig einstellbar ist, wodurch die Lage der Leiteinrichtung in Bezug auf die Fördereinrichtung während und nach der Einstellung davon unberührt bleibt. So kann beispielsweise die Kette eines Kettenelevators in beliebiger Weise nachgespannt oder ggf. auch entspannt werden, ohne daß dabei die Signale der Meßeinrichtung aufgrund einer sich geometrisch ändernden Anordnung der Meßeinrichtung verfälscht werden.

Ein konkretes Ausführungsbeispiel ist in den weiteren Unteransprüchen beansprucht, wobei diese konkrete Ausführungsform im folgenden anhand der Figuren erläutert ist. Es zeigen:
- Fig 1:: einen Querschnitt durch eine Fördereinrichtung;
- Fig. 2 + 3:: einen Längsschnitt durch eine Fördereinrichtung.

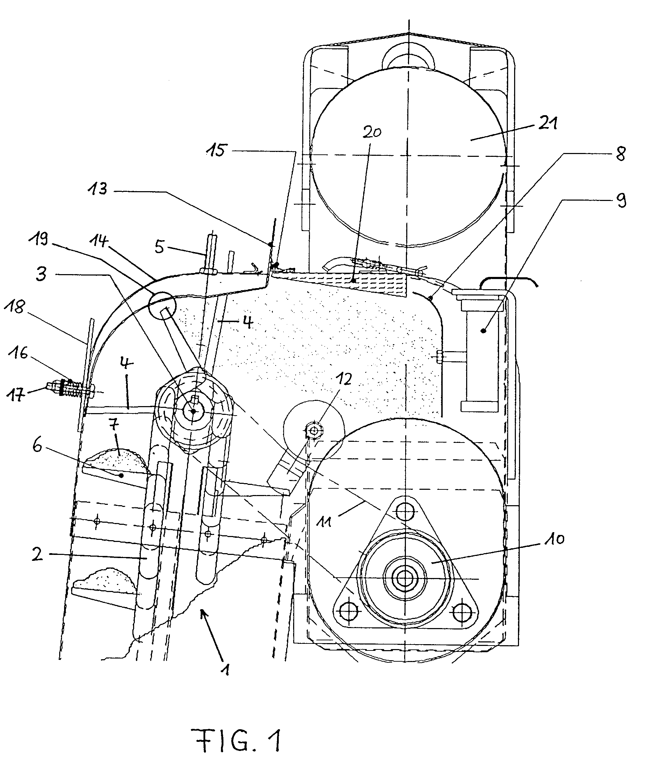

Die Fig. 1 zeigt einen Querschnitt durch eine Fördereinrichtung, wobei die Fördereinrichtung als Kettenelevator 1 ausgebildet ist. der Kettenelevator 1 besteht aus einer umlaufenden Kette mit Kettengliedern 2, wobei die Kette um einen Lagerpunkt 3 umläuft. Der Kettenelevator 1 ist über einen Rahmen 4 befestigbar. Weiterhin ist eine Spanneinrichtung 5 vorgesehen, mit der die Lage des Kettenelevators 1 einstellbar ist, um beispielsweise die Kette zu spannen oder zu entspannen. An der umlaufenden Kette sind in regelmäßigen Abständen Schaufel 6 (oder Förderscheiben) befestigt, die dadurch eine Erntegutmenge 7 nach oben oder schräg nach oben fördern und es an dem oberen Lagerpunkt 3 abwerfen. Ein solcher Kettenelevator 1 ist ein an sich bekanntes Bauteil eines Mähdreschers und dient beispielsweise dem Transport von ausgedroschenen Körnern, die die Dresch- und Reinigungseinrichtungen durchlaufen haben, in Richtung eines Körnertankes des Mähdreschers.

Dem Kettenelevator 1 ist ein eine Prallplatte 8 aufweisender Sensor 9 zur Erfassung zumindest eines Teiles der Erntegutmenge 7 nachgeordnet, wobei der Sensor 9 (beispielsweise ein Drucksensor) bei Beaufschlagung der Prallplatte 8 mit der Erntegutmenge 7 ein elektrisches Signal an eine nicht gezeigte Auswerteeinheit abgibt.

Weiterhin ist ein Antrieb 10 vorgesehen, der über eine Antriebskette 11 die Elevatorkopfschnecke 22 antreibt, wobei zum Spannen der Antriebskette 11 noch eine Andruckrolle 12, die die Antriebskette 11 beispielsweise mittels Federkraft spannt, vorgesehen ist.

Als erfindungsgemäße Leiteinrichtung ist ein Formblech 13 vorgesehen, das an einem Förderkanal 14, in dem der Kettenelevator 1 angeordnet ist, befestigt ist. Dieses Formblech 13 ist in einem Endbereich des Kettenelevators 1 um den Lagerpunkt 3 in etwa in Form eines Viertelkreises angeordnet. In Förderrichtung der Erntegutmenge 7 gesehen ist am Ende des Formbleches 13 eine Dichtung 15 vorgesehen, so daß das Formblech 13 dichtend durch einen Längsschlitz durch den Förderkanal 14 verschiebbar ist. Um das Formblech 13 beim Einstellen beziehungsweise Verstellen zu stabilisieren und abzudichten, sind in dem Förderkanal 14 Langlöcher angeordnet, wobei durch diese Langlöcher und entsprechende Löcher in dem Formblech 13 mit Druckfedern 16 belastete Schrauben 17 angeordnet sind, wobei die Druckfedern 16 das Formblech 13 auf der Innenseite an den Förderkanal 14 drücken, um zu verhindern, daß Körner oder Schmutz in den Zwischenraum zwischen dem Formblech 13 und dem Förderkanal 14 gedrückt werden. Zu diesem Zweck ist noch weiterhin ein Dichtblech 18 vorgesehen, das lediglich runde Löcher zur Durchführung der Schrauben 17 aufweist und bei einer Einstellung des Formbleches 13 beziehungsweise einer Einstellung des Kettenelevators 1 mit verschoben wird und die Langlöcher in dem Förderkanal 14 abdeckt.

Aufgrund der erfindungsgemäßen Einstellbarkeit des Kettenelevators 1 in Bezug auf den Förderkanal 14 und/oder die Einstellbarkeit des Formbleches 13 in Bezug auf den Kettenelevator 1 beziehungsweise dessen Außenkonturen ist gewährleistet, daß ein mit der Bezugsziffer 19 bezeichnetes Maß (Abstand) zwischen den Enden der Schaufeln 6 und der Oberfläche des Formbleches 13 konstant bleibt, um eine hohe Meßgenauigkeit zu erreichen. So bleibt bei einem Einstellen des Kettenelevators 1 durch Spannen oder Entspannen der Kette das Maß 19 erhalten, da das Formblech 13 durch den Längschlitz durch den Förderkanal 14 mit verschiebbar ist, wobei beispielsweise aufgrund eines Verschleißes der Schaufel 6, die eine Verringerung des Maßes 19 zur Folge haben, dieses Maß ebenfalls durch Lösen der Schrauben 17, einstellen und anschließendem Festziehen wieder einstellbar ist. Dies hat darüber hinaus den Vorteil, daß das zur Erreichung der hohen Meßgenauigkeit erforderliche Maß 19 beim Einstellen ausgemessen werden kann, so daß eine Einstellung mittels eines Probelaufes entfallen kann.

Die im wesentlichen viertelkreisförmige Ausgestaltung des Formbleches 13 im Bereich der Förderrichtung der Erntegutmenge 4, die in Fig. 1 gezeigt ist, hat darüber hinaus den Vorteil, daß diese Erntegutmenge 7 in Richtung der Prallplatte 8 des Sensors 9 geleitet wird. Bei dem Querschnitt gemäß Fig. 1 ist nicht gezeigt, daß die Antriebseinheit des Kettenelevators 1 (Antrieb 10, Antriebskette 11 sowie Andruckrolle 12) durch eine nicht gezeigte Abdeckung von der Erntegutmenge 7 ferngehalten ist, die jedoch vorhanden ist.

Weiterhin ist vorgesehen, daß sich der Leiteinrichtung (Formblech 13) Mittel zur Umlenkung der Erntegutmenge 7 anschließen, wobei in Fig. 1 diese Mittel als Umlenkblech 20 ausgebildet sind. Durch die beispielsweise in etwa keilförmige Ausgestaltung des Umlenkbleches 20 wird erreicht, daß die Gutmenge zur Prallplatte 8 geleitet wird und daß es in den Übergangsbereichen zwischen dem Formblech 13 und dem Umlenkblech 20 beziehungsweise zwischen dem Umlenkblech 20 und der Prallplatte 8 zu keinen Stauungen kommen kann.

In Fig. 1 ist weiterhin vereinfacht gezeigt, daß sich der ersten Fördereinrichtung (dem Kettenelevator 1, einer Förderschnecke oder dergleichen) eine weitere Fördereinrichtung 21 anschließt, die im folgenden beschrieben ist.

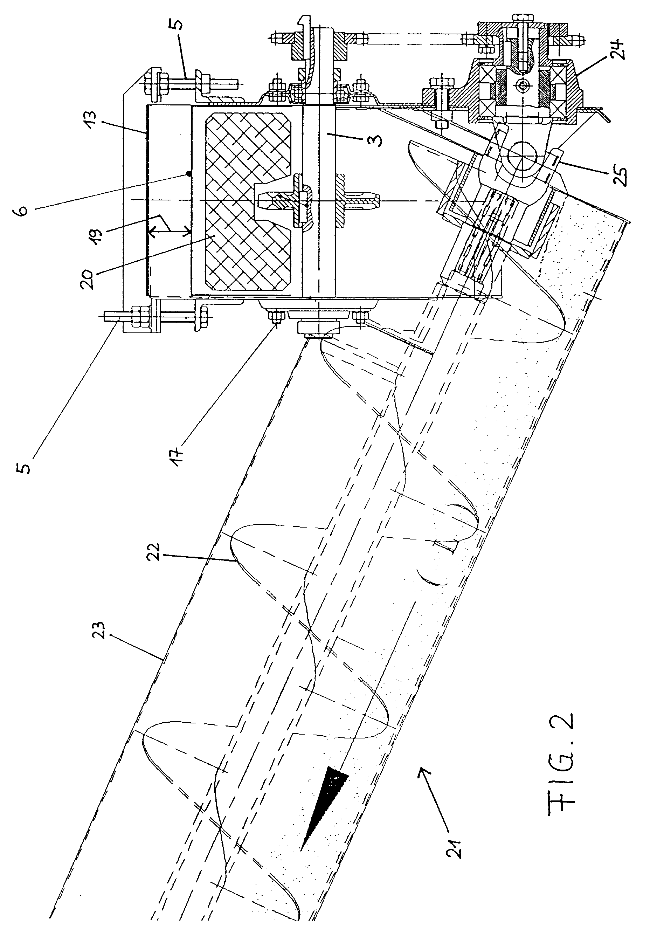

Fig. 2 zeigt einen Längsschnitt durch die Fördereinrichtung und die weitere Fördereinrichtung, wobei die weitere Fördereinrichtung 21 eine Förderschnecke 22 aufweist, die in einem weiteren Förderkanal 23 angeordnet ist, wobei zumindest für die Förderschnecke 22 ein Antrieb 24 vorgesehen ist, wobei zwischen dem Antrieb 24 und der Förderschnecke 22 ein Kardangelenk 25 angeordnet ist, wodurch ein Verschwenken der weiteren Fördereinrichtung 21 gewährleistet ist. Der Antrieb 24 für die weitere Fördereinrichtung 21 und der Antrieb 10 für die erste Fördereinrichtung (Kettenelevator 1) können gemeinsam oder getrennt voneinander erfolgen, wobei in Fig. 2 gezeigt ist, daß der Antrieb über einen nicht bezeichneten Riemen (Kette oder dergleichen) gemeinsam erfolgt. Außerdem sind in Fig. 2 die schon in Bezug auf Fig. 1 beschriebenen Komponenten gezeigt, wobei bei dieser Darstellung noch einmal deutlich wird, daß zwischen der Längskante der Schaufel 6 und dem Formblech 13 das Maß 19 vorhanden ist und bei Betätigung der Spanneinrichtung 5 dieses Maß 19 erhalten bleibt, wenn bei Betrachtung der Fig. 2 der Kettenelevator 1 nach oben oder unten längs verschoben wird. Sollte es zu einem Verschleiß der Schaufeln 6 (beispielsweise durch einen Abrieb) kommen, kann das Maß 19 ebenfalls wieder auf ein konstantes vorgebbares Maß eingestellt werden.

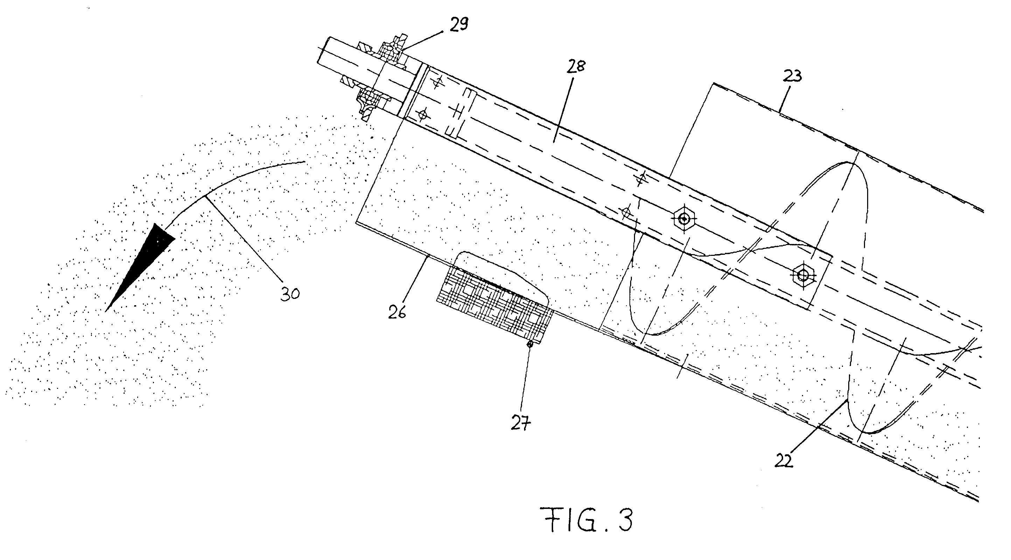

Fig. 3 zeigt nochmals den Längsschnitt durch die weitere Fördereinrichtung 21, wobei hier nun ein Endbereich 26 dargestellt ist, wobei in diesem Endbereich 26 ein Sensor 27 angeordnet ist, der beispielsweise zusätzlich eine Erfassung der Feuchtigkeit des Erntegutes übernimmt und diese Ergebnisse mit denen der Durchsatzmessung, in Abhängigkeit der jeweils gemessenen Elevatordrehzahl, über eine Auswerteeinheit zu einem entsprechenden Durchsatzergebnis verarbeitet wird. Die Anordnung des Sensors 27 in dem Endbereich 26 der weiteren Fördereinrichtung 21 hat den Vorteil, daß keine Schwächung der Förderschnecke 22 durch Unterbrechung der Schneckenwendel in einem hoch beanspruchten Bereich erfolgt, was der Fall wäre, wenn der Sensor 27 in dem Bereich der Förderschnecke 22 angeordnet wäre. In vorteilhafter Weise ist der Endbereich 26 als offene Halbschale ausgebildet, wobei in diesem Bereich auch eine Welle 28 der Förderschnecke 22 in einem Lager 29 gelagert ist. Die von der Förderschnecke 22 geförderte Erntegutmenge wird über den als offene Halbschale ausgebildeten Endbereich 26 über den Sensor 27 geschoben, von wo es aus anschließend in eine Richtung 30 in einen nicht gezeigten Korntank fällt oder gedrückt wird. Von der Kabine aus ist dieser Sensor zu kontrollieren, da bei hohem, feuchtem Schmutzbesatz eine Reinigung erfolgen muß, um die korrekten Feuchtigkeitswerte anzuzeigen.

## Patentansprüche

1. Mähdrescher zumindest mit einer in einem Förderkanal (14) zur Förderung einer Erntegutmenge (7), insbesondere einer Körnermenge, angeordneten Fördereinrichtung, wobei der Fördereinrichtung eine Meßeinrichtung zur Erfassung zumindest eines Teiles der Erntegutmenge (7) nachgeordnet ist,
*dadurch gekennzeichnet,* daß die Lage der Fördereinrichtung in Bezug auf den Förderkanal (14) einstellbar ist.

2. Mähdrescher nach Anspruch 1,
*dadurch gekennzeichnet,* daß zwischen einem Endbereich der Fördereinrichtung und dem Förderkanal (14) eine einstellbare Leiteinrichtung angeordnet ist.

3. Mähdrescher nach Anspruch 2,
*dadurch gekennzeichnet,* daß die Leiteinrichtung in Bezug auf den Förderkanal (14) festsetzbar einstellbar ist.

4. Mähdrescher nach Anspruch 2 oder 3,
*dadurch gekennzeichnet,* daß die Leiteinrichtung fest an der Fördereinrichtung angeordnet ist.

5. Mähdrescher nach Anspruch 4,
*dadurch gekennzeichnet,* daß die Befestigung der Leiteinrichtung außerhalb des Förderkanales (14) erreichbar ist.

6. Mähdrescher nach einem der Ansprüche 2 bis 5,
*dadurch gekennzeichnet,* daß der Abstand zwischen der Leiteinrichtung und den Elevatorpaddeln (6) der Fördereinrichtung ein vorgebbares konstantes Maß (19) hat und nach einer Einstellung konstant bleibt.

7. Mähdrescher nach einem der vorhergehenden Ansprüche,
*dadurch gekennzeichnet,* daß die Fördereinrichtung ein Kettenelevator (1) und die Leiteinrichtung ein dem Endbereich des Kettenelevators (1) angepaßtes Formblech (13) ist.

8. Mähdrescher nach Anspruch 7,
*dadurch gekennzeichnet,* daß das Formblech (13) mit seinem einen Ende mittels eines Längsschlitzes am Förderkanal (14) verschiebbar ist.

9. Mähdrescher nach einem der vorhergehenden Ansprüche,
*dadurch gekennzeichnet,* daß sich der Leiteinrichtung Mittel zur Umlenkung [Umlenkblech (20)] der Erntegutmenge (7) anschließen.

10. Mähdrescher nach einem der vorhergehenden Ansprüche,
*dadurch gekennzeichnet,* daß der Fördereinrichtung eine weitere Fördereinrichtung (21) nachgeordnet ist, wobei außerhalb des Arbeitsbereiches der weiteren Fördereinrichtung (21) eine weitere Meßeinrichtung [Sensor (27) zur Erfassung der Feuchtigkeit der Erntegutmenge (7)] angeordnet ist.
